# FASCICULE DE BREVET EUROPEEN

(11) **EP 2 430 896 B1**
(45) Date de publication et mention de la délivrance du brevet: **03.07.2013**
(21) Numéro de dépôt: 11181180.8
(22) Date de dépôt: 14.09.2011
(51) Int. Cl.: A01B 73/00, A01C 7/20

(54) **Semoir monograine comportant un cadre d'attelage perfectionné**
Einzelkornsämaschine mit einem verbesserten Kupplungsrahmen
Planter with an improved coupling frame

(30) Priorité: 16.09.2010 FR 1057389
(43) Date de publication de la demande: 21.03.2012
(73) Titulaire: KUHN S.A., 67700 Saverne (FR)
(72) Inventeur: Audigié, Jean-Charles, 67330 Bouxwiller (FR)
(74) Mandataire: Esch, Esther Evelyne

(56) Documents cités:
- EP-A1- 2 030 495
- EP-A2- 0 281 932
- DE-A1- 4 303 101

## Description

La présente invention se rapporte au domaine technique général du machinisme agricole. L'invention concerne un semoir monograine comportant un châssis sur lequel sont répartis de manière régulière des éléments semeurs et un cadre d'attelage comportant une attache supérieure et deux attaches inférieures permettant la liaison à un attelage trois points d'un tracteur, ledit cadre d'attelage étant relié audit châssis au moyen d'une traverse supérieure et de deux plaques d'ancrage, ladite attache supérieure s'étend sur ladite traverse supérieure et sensiblement dans un plan vertical médian dudit semoir et lesdites attaches inférieures s'étendent en dessous et de part et d'autre dudit plan vertical médian.

Un tel semoir comportant un châssis sur lequel sont répartis six éléments semeurs à écartements constants et réglables est connu par le document EP-A-2030495. Ce semoir monograine comporte un cadre d'attelage permettant sa liaison au système d'attelage à trois points d'un tracteur. Le cadre d'ancrage présente ainsi une attache supérieure et deux attaches inférieures. Le cadre d'attelage est lié au châssis par l'intermédiaire d'une traverse supérieure et de deux plaques d'ancrage. La position des attaches sur le cadre d'attelage étant définie par une norme se rapportant à l'attelage trois points. La traverse porte l'attache supérieure qui est disposée dans le plan vertical médian du semoir. Les attaches inférieures s'étendent en dessous et de part et d'autre de l'attache supérieure. Les plaques d'ancrage s'étendant dans le prolongement desdites attaches inférieures vers le châssis. Ainsi, la forme des plaques d'ancrage est simple puisqu'elle réalise une liaison directe du châssis vers les attaches inférieures. Le châssis est réalisé sous la forme d'une poutre transversale permettant d'implanter des cultures à des écartements différents. Pour cela, les éléments semeurs sont montés sur la poutre transversale via un chariot respectif. Dans une configuration pour le semis de maïs, les six éléments sont écartés de 70 à 80 cm et les éléments centraux s'étendent avec leur chariot dans l'espace défini entre lesdites attaches inférieures.

Pour augmenter le débit de chantier du semoir lors de l'implantation de tournesol et faire passer trois rangs entre les roues du tracteur sans les écraser, il est courant d'ajouter un élément supplémentaire sur la poutre transversale. Le semoir aura alors un nombre de rangs impair. Cet élément supplémentaire est disposé dans le plan vertical médian de la poutre transversale et les six éléments semeurs sont alors décalés de part et d'autre de cet élément supplémentaire. L'écartement entre les lignes est généralement de 50 à 60 cm pour le tournesol. Afin de s'adapter à cette nouvelle configuration, les éléments centraux sont démontés pour les placer au-delà des plaques d'ancrage. Cette manipulation est coûteuse en temps et monopolise deux personnes. Etant donné que les plaques d'ancrage sont soudées sur la poutre transversale, il n'est pas possible de déplacer les chariots des éléments centraux le long de la poutre transversale.

La présente invention a pour but de remédier aux inconvénients précités. Elle doit notamment proposer un semoir monograine pour lequel les éléments semeurs peuvent être déplacés simplement pour s'adapter à une configuration précise.

A cet effet, une importante caractéristique de l'invention consiste en ce que lesdites deux plaques d'ancrage s'étendent respectivement au voisinage d'un plan moyen s'étendant sensiblement à mi-distance entre le plan vertical médian et un plan passant par l'attache inférieure correspondante, lesquels plans sont sensiblement parallèles au plan vertical médian. Grâce à cette disposition, le déplacement des éléments semeurs centraux peut se faire plus facilement afin d'adapter leur position à la configuration souhaitée. Le passage d'une configuration de semoir à nombre de rangs pair à une configuration de semoir à nombre de rangs impair, et inversement, est plus rapide et bien plus aisé. En effet, la plage de déplacement des éléments centraux n'est plus limitée par les plaques d'ancrage.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** représente une vue de dessus d'un semoir selon la présente invention dans une première configuration de travail,
- la **figure 2** est une vue en coupe selon II-II de la figure 1,
- la **figure 3** représente une vue de dessus du semoir selon l'invention dans une deuxième configuration de travail,
- la **figure 4** est une vue en coupe selon IV-IV de la figure 3.

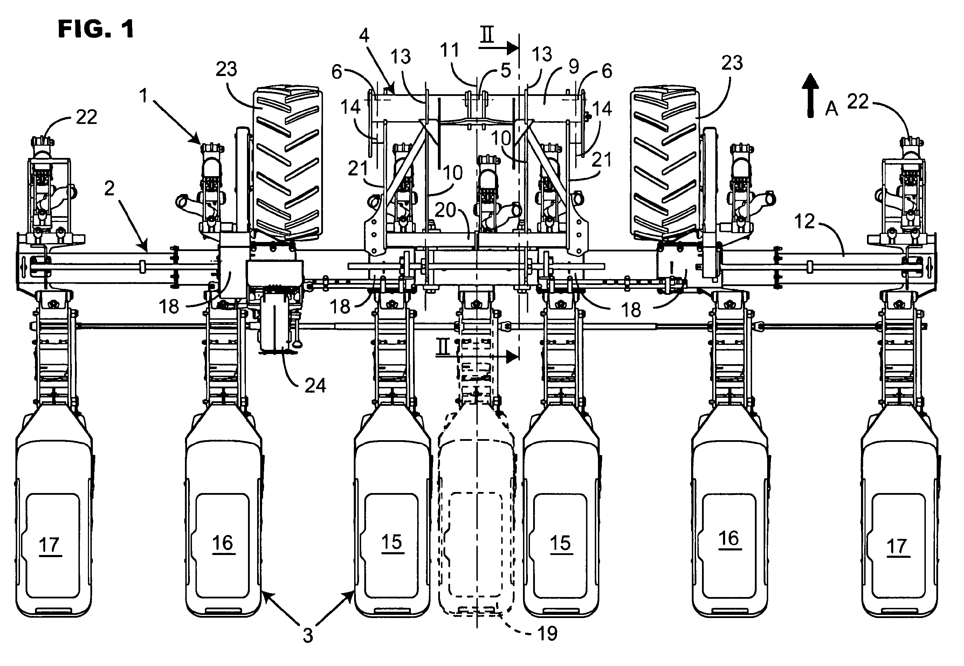

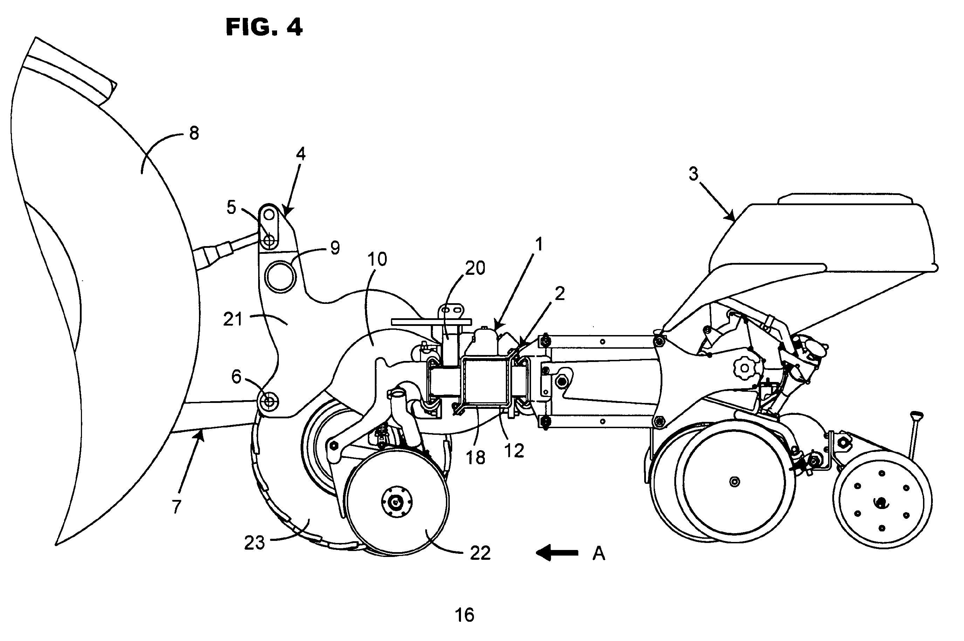

La machine agricole selon l'invention est un semoir (1) du type monograine ou semoir à éléments. Un tel semoir (1) distribue les graines une à une sur la ligne de semis à des écartements constants. La figure 1 est une vue de dessus d'un tel semoir. Le semoir (1) comporte un châssis (2) sur lequel sont répartis de manière régulière des éléments semeurs (3) et un cadre d'attelage (4) avec une attache supérieure (5) et deux attaches inférieures (6). Les attaches inférieures (6) s'étendent en dessous et de part et d'autre de l'attache supérieure (5). Le cadre d'attelage (4) permet la liaison à un attelage trois points (7) d'un tracteur. Cet attelage trois points (7) permet de transférer le poids et l'effort du semoir (1) sur les roues arrière (8) du tracteur. Seule la partie arrière du tracteur et ses roues arrière (8) sont visibles sur la figure 4. Le tracteur déplace le semoir (1) suivant une direction d'avance indiquée par la flèche (A). Dans la suite de la description, les notions suivantes "avant", "arrière" et "devant", "derrière" sont définies par rapport au sens d'avance (A).

Le cadre d'attelage (4) est relié au châssis (2) au moyen d'une traverse supérieure (9) et de deux plaques d'ancrage (10). La traverse supérieure (9) s'étend sensiblement horizontalement et perpendiculairement à la direction d'avance (A). Elle porte l'attache supérieure (5). L'attache supérieure (5) est positionnée sensiblement dans le plan vertical médian (11) du semoir (1). Les plaques d'ancrage (10) s'étendent de part et d'autre dudit plan vertical médian (11) et relient la traverse supérieure (9) au châssis (2). Le châssis (2) est constitué d'une poutre transversale (12) sensiblement horizontale sur laquelle sont répartis les éléments semeurs (3) suivant un écartement défini et réglable. Les éléments semeurs (3) sont avantageusement répartis symétriquement sur la poutre transversale (12) par rapport au plan vertical médian (11). Chaque élément semeur (3) possède une trémie, un dispositif de dosage et un dispositif d'implantation. Le montage de l'élément semeur (3) sur la poutre transversale (12) se fait au moyen d'un parallélogramme déformable qui lui permet de se déplacer parallèlement au sol. Afin de garantir un dosage homogène des graines, la vitesse de rotation du dispositif de dosage est avantageusement proportionnelle à la vitesse d'avance du semoir (1).

Selon une importante caractéristique de l'invention, les deux plaques d'ancrage (10) s'étendent respectivement au voisinage d'un plan moyen (13) s'étendant sensiblement à mi-distance entre le plan vertical médian (11) et un plan (14) passant par l'attache inférieure (6) correspondante, lesquels plans (13, 14) sont sensiblement parallèles au plan vertical médian (11). Grâce à cette disposition des plaques d'ancrage (10), le réglage de l'écartement entre les éléments semeurs (3) est rapide et facile à réaliser. La figure 1 représente un premier exemple de réalisation d'un semoir (1) dans une première configuration. Il comporte six éléments semeurs (3). Puisqu'un élément semeur correspond à un rang, le semoir (1) représenté comporte donc un nombre de rangs pair. Les éléments semeurs (3) sont répartis symétriquement sur la poutre transversale (12) et chacun sera dénommé par rapport à sa position sur la poutre transversale (12), ainsi il y a des éléments centraux (15), intermédiaires (16) et extérieurs (17). Les éléments centraux (15) sont définis comme étant ceux proches du plan vertical médian (11) du semoir (1). Les éléments extérieurs (17) sont définis comme étant ceux qui sont disposés aux extrémités de la poutre transversale (12). Les éléments intermédiaires (16) sont, quant à eux, placés entre les éléments centraux (15) et les éléments extérieurs (17). La conception du châssis (2) permet de modifier rapidement l'écartement des éléments semeurs (3) selon une grande amplitude. Pour cela, chaque élément (15, 16, 17) est monté sur la poutre transversale (12) au moyen d'un chariot (18). Les éléments (15, 16, 17) formant un semoir à nombre de rangs pair s'étendent en dehors des plans verticaux passant par les plaques d'ancrage (10). Grâce à cette disposition des éléments centraux (15) à l'extérieur des plaques d'ancrage (10), l'adaptation de la position des éléments centraux (15) à la configuration et à l'écartement souhaités est bien plus facile et rapide. Les éléments centraux (15) étant montés sur la poutre transversale (12) via un chariot respectif (18), le déplacement se fait par translation le long de la poutre transversale (12). La plage de déplacement des éléments centraux (15) n'est plus limitée par les plaques d'ancrage (10). La plage de réglage de l'écartement s'étend de 45 cm à 80 cm avec pour minimum le nombre de rangs impair * 45 cm et avec pour maximum le nombre de rangs pair 80 cm. Par exemple, la valeur 45 cm correspondant à un écartement pour le tournesol et la valeur 80 cm correspondant à un écartement pour le maïs.

D'une manière préférentielle, les deux plaques d'ancrage (10) s'étendent exactement dans le plan moyen (13) correspondant. Lorsque les deux éléments centraux (15) sont disposés directement à l'extérieur et à côté des plaques d'ancrage (10), le semoir (1) est alors dans une configuration à écartement minimum entre les éléments semeurs (3).

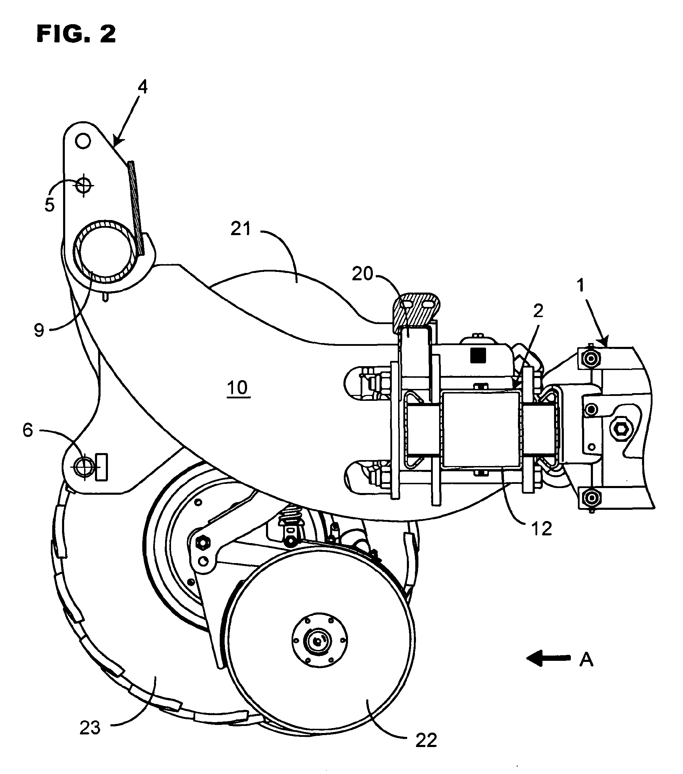

A la lumière de la figure 2, on remarque que la plaque d'ancrage (10) est bridée sur la poutre transversale (12) par l'intermédiaire de vis de fixation. La poutre transversale (12) est creuse et présente une forme carrée. La traverse supérieure (9) est de forme circulaire.

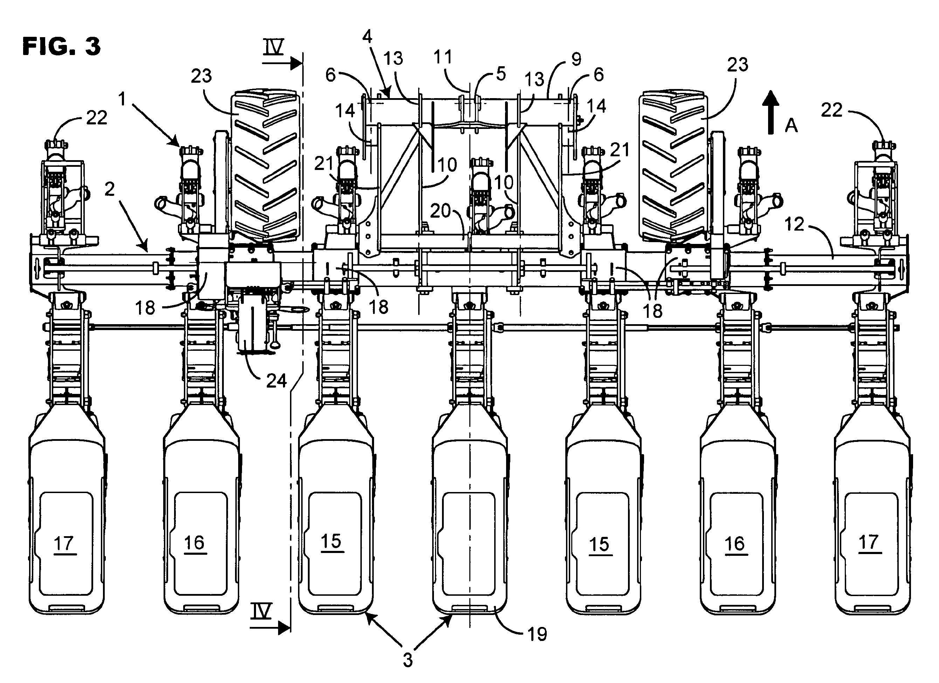

La figure 3 représente un deuxième exemple de réalisation d'un semoir (1) dans une autre configuration. Ce semoir (1) comporte un élément supplémentaire (19) en sus des éléments (15, 16, 17). Le semoir représenté à la figure 3 correspond au semoir représenté à la figure 1 avec en plus un élément supplémentaire (19). Cet élément supplémentaire (19) s'étend sensiblement dans le plan vertical médian (11) du semoir (1). L'élément supplémentaire (19) est identique aux éléments semeurs (3), à la différence qu'il est monté directement sur la poutre transversale (12). Il ne possède pas de chariot du fait de sa position centrale. L'élément supplémentaire (19) est disposé entre les éléments centraux (15) et plus spécifiquement entre les deux plaques d'ancrage (10). La disposition des plaques d'ancrage (10) au voisinage du plan moyen (13) correspondant préserve donc un espace dans le plan vertical médian (11) pour un éventuel élément supplémentaire (19). Le semoir (1) représenté à la figure 3 est dans une configuration impaire, c'est-à-dire que les sept éléments (15, 16, 17, 19) sont actifs au travail. On remarque que l'écartement entre les éléments (15, 16, 17, 19) est identique. D'une manière avantageuse, l'élément supplémentaire (19) peut passer d'une position active de travail à une position inactive. Pour cela, il peut pivoter vers le haut par rapport à la poutre transversale (12) lorsqu'il n'est pas utilisé. La figure 1 montre l'élément supplémentaire (19) dans une telle position, il est représenté en traits discontinus. Dans une alternative, l'élément supplémentaire est débrayé pour ne pas semer et roule sur le sol.

On peut voir que cet élément supplémentaire (19) ne gêne pas le fonctionnement du semoir (1) dans sa configuration à nombre de rangs pair. Etant donné qu'il peut être rendu inactif, l'élément supplémentaire (19) n'a pas besoin d'être démonté. Le passage d'une configuration de semoir à nombre de rangs pair à une configuration de semoir à nombre de rangs impair, et inversement, peut donc être effectué avec facilité et rapidité.

Dans l'exemple de réalisation représenté, le cadre d'attelage (4) comporte également une traverse inférieure (20). Elle s'étend derrière et en dessous de la traverse supérieure (9). La traverse inférieure (20) est sensiblement parallèle à la traverse supérieure (9). Elle s'étend sensiblement devant et au-dessus de la poutre transversale (12). Grâce à cette traverse inférieure (20) qui reprend une partie des sollicitations, le cadre d'attelage (4) pourra être dimensionné avec plus de finesse, ce qui permettra une réduction du poids. Pour que les sollicitations puissent passer directement vers les attaches inférieures (6) du cadre d'attelage (4), chaque extrémité de la traverse inférieure (20) est pourvue d'une plaque de liaison (21). La plaque de liaison (21) relie donc la traverse inférieure (20) à une attache inférieure (6) correspondante. Chaque plaque de liaison (21) s'étend globalement au-dessus d'un plan horizontal passant par les attaches inférieures (6).

Ces plaques de liaison (21) permettent de rigidifier les attaches inférieures (6) du cadre d'attelage (4). Les efforts pourront ainsi passer directement de la traverse inférieure (20) vers les attaches inférieures (6) et inversement. Ceci permet de réduire la section de la traverse supérieure (9) et l'épaisseur des plaques d'ancrage (10). Ceci permettra d'alléger le cadre d'attelage (4) tout en ayant une bonne résistance aux efforts.

Le semoir (1) comporte un équipement de fertilisation pour pouvoir réaliser l'apport d'engrais et le semis de graines en un seul passage. L'équipement de fertilisation est composé d'une trémie (non représentée), de socs enfouisseurs (22) et de dispositifs d'acheminement vers les socs enfouisseurs (22). Un soc enfouisseur (22) est monté à l'avant de chaque élément semeur (3). Pour que l'engrais soit placé au voisinage des graines, le soc enfouisseur (22) est décalé latéralement par rapport à l'élément semeur (3). La trémie destinée à contenir le fertilisant est portée par le cadre d'attelage (4). C'est la traverse inférieure (20) qui supporte la trémie. Les socs enfouisseur (22) sont disposés devant la poutre transversale (12). Pour permettre le déplacement des chariots (18) des éléments centraux (15), les plaques de liaison (21) présentent une forme arrondie qui est dégagée dans sa partie inférieure. Le soc enfouisseur (22) pourra ainsi glisser sous les plaques de liaison (21) (figure 4).

Le châssis (2) s'appuie sur le sol via des roues (23). Les roues (23) sont montées sur le charriot (18) de l'élément intermédiaire (16). Elles sont montées décalées latéralement par rapport à cet élément intermédiaire (16) pour que les graines ne soient pas semées dans les traces laissées par les roues (23). Pour semer les graines avec un écartement constant, la vitesse de la distribution est adaptée à la vitesse d'avance du semoir (1). Ainsi, les roues (23) du semoir entraînent une boîte de vitesses (24) qui transmet le mouvement aux éléments semeurs (3) via une barre d'entraînement. On remarque que la boîte de vitesses (24) est disposée en dehors des plans verticaux passant par les plaques d'ancrage (10). La boîte de vitesses (24) s'étend entre un élément central (15) et un élément intermédiaire (16). Cette position permet un accès optimal à la boîte de vitesses (24) par l'arrière. De préférence, la boîte de vitesses (24) s'étend dans la zone à l'arrière de la roue (23).

Les exemples de réalisation des figures présentent un semoir possédant six voire sept rangs. L'invention s'applique également à des semoirs ayant un nombre de rangs plus importants.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, dans la limite du domaine de protection tel qu'il est défini par les revendications suivantes.

## Revendications

1. Semoir monograine (1) comportant un châssis (2) sur lequel sont répartis de manière régulière des éléments semeurs (3) et un cadre d'attelage (4) comportant une attache supérieure (5) et deux attaches inférieures (6) permettant la liaison à un attelage trois points (7) d'un tracteur, ledit cadre d'attelage (4) étant relié audit châssis (2) au moyen d'une traverse supérieure (9) et de deux plaques d'ancrage (10), ladite attache supérieure (5) s'étend sur ladite traverse supérieure (9) et sensiblement dans un plan vertical médian (11) dudit semoir (1), lesdites attaches inférieures (6) s'étendent en dessous et de part et d'autre dudit plan vertical médian (11), ***caractérisé en ce que*** lesdites deux plaques d'ancrage (10) s'étendent respectivement au voisinage d'un plan moyen (13) s'étendant sensiblement à mi-distance entre le plan vertical médian (11) et un plan (14) passant par l'attache inférieure (6) correspondante, lesquels plans (13, 14) sont sensiblement parallèles au plan vertical médian (11).

2. Semoir selon la revendication 1, ***caractérisé en ce que*** lesdits éléments semeurs (3) formant un semoir à nombre de rangs pair s'étendent à l'extérieur des plans verticaux passant par lesdites plaques d'ancrage (10).

3. Semoir selon la revendication 1 ou 2, ***caractérisé en ce* qu'**un élément semeur supplémentaire (19) est disposé sensiblement dans le plan vertical médian (11) pour former un semoir à nombre de rangs impair.

4. Semoir selon la revendication 3, ***caractérisé en ce que*** lesdites plaques d'ancrage (10) s'étendent dans le voisinage dudit élément semeur supplémentaire (19) et de part et d'autre de ce dernier.

5. Semoir selon l'une quelconque des revendications 1 à 4, ***caractérisé en ce que*** lesdites plaques d'ancrage (10) s'étendent exactement dans ledit plan moyen (13) correspondant.

6. Semoir selon l'une quelconque des revendications 1 à 5, ***caractérisé en ce que*** ledit cadre d'attelage (4) comporte une traverse inférieure (20) laquelle s'étend à l'arrière et en dessous de ladite traverse supérieure (9).

7. Semoir selon la revendication 6, ***caractérisé en ce* qu'**une plaque de liaison (21) est destinée à relier chaque extrémité de ladite traverse inférieure (20) à l'attache inférieure (6) correspondante.

8. Semoir selon la revendication 7, ***caractérisé en ce que*** chaque plaque de liaison (21) s'étend globalement au-dessus d'un plan horizontal passant par lesdites attaches inférieures (6) et présente une forme arrondie dégagée dans sa partie inférieure.

9. Semoir selon l'une quelconque des revendications 1 à 8, ***caractérisé en ce* qu'**il est équipé de socs enfouisseurs (22) s'étendant à l'avant de chaque élément semeur (3) et que ledit cadre d'attelage (4) supporte la trémie contenant du fertilisant.

10. Semoir selon l'une quelconque des revendications 1 à 9, ***caractérisé en ce* qu'**une boîte de vitesses (24) s'étend en dehors des plans verticaux passant par lesdites plaques d'ancrage (10).

## Patentansprüche

1. Einzelkornsämaschine (1) mit einem Rahmen (2), auf dem auf regelmäßiger Weise Säelemente (3) verteilt sind, und einem Kupplungsrahmen (4), der eine obere Befestigung (5) und zwei untere Befestigungen (6), die die Verbindung mit einer Dreipunktkupplung (7) eines Traktors ermöglichen, umfasst, wobei der Kupplungsrahmen (4) mit dem Rahmen (2) mittels eines oberen Querbalkens (9) und zwei Verankerungsplatten (10) verbunden ist, wobei sich die obere Befestigung (5) auf dem oberen Querbalken (9) und im Wesentlichen in einer vertikalen Mittelebene (11) der Sämaschine (1) erstreckt, wobei sich die unteren Befestigungen (6) unter und beiderseits der vertikalen Mittelebene (11) erstrecken, ***dadurch gekennzeichnet,* dass** sich die zwei Verankerungsplatten (10) jeweils in der Nähe einer mittleren Ebene (13) erstrecken, die sich im Wesentlichen auf halber Distanz zwischen der vertikalen Mittelebene (11) und einer Ebene (14) erstreckt, die durch die entsprechende untere Befestigung (6) verläuft, wobei die Ebenen (13, 14) im Wesentlichen parallel zur vertikalen Mittelebene (11) sind.

2. Sämaschine nach Anspruch 1, ***dadurch gekennzeichnet,* dass** sich die Säelemente (3), die eine Sämaschine mit gerader Anzahl von Reihen bilden, außerhalb der Vertikalebenen, die durch die Verankerungsplatten (10) verlaufen, erstrecken.

3. Sämaschine nach Anspruch 1 oder 2, ***dadurch gekennzeichnet,* dass** ein zusätzliches Säelement (19) im Wesentlichen in der vertikalen Mittelebene (11) angeordnet ist, um eine Sämaschine mit ungerader Anzahl von Reihen zu bilden.

4. Sämaschine nach Anspruch 3, ***dadurch gekennzeichnet,* dass** sich die Verankerungsplatten (10) in der Nähe des zusätzlichen Säelements (19) und beiderseits dieses letztgenannten erstrecken.

5. Sämaschine nach irgend einem der Ansprüche 1 bis 4, ***dadurch gekennzeichnet,* dass** sich die Verankerungsplatten (10) genau in der entsprechenden mittleren Ebene (13) erstrecken.

6. Sämaschine nach irgend einem der Ansprüche 1 bis 5, ***dadurch gekennzeichnet,* dass** der Kupplungsrahmen (4) einen unteren Querbalken (20) umfasst, der sich hinter und unter dem oberen Querbalken (9) erstreckt.

7. Sämaschine nach Anspruch 6, ***dadurch gekennzeichnet,* dass** eine Verbindungsplatte (21) dazu bestimmt ist, jedes Ende des unteren Querbalkens (20) mit der entsprechenden unteren Befestigung (6) zu verbinden.

8. Sämaschine nach Anspruch 7, ***dadurch gekennzeichnet,* dass** sich jede Verbindungsplatte (21) global über einer Horizontalebene, die durch die unteren Befestigungen (6) verläuft, erstreckt und eine abgerundete Form aufweist, die in ihrem unteren Teil ausgeschnitten ist.

9. Sämaschine nach irgend einem der Ansprüche 1 bis 8, ***dadurch gekennzeichnet,* dass** sie mit Einleger (22) versehen ist, die sich vorne an jedem Säelement (3) erstrecken, und dass der Kupplungsrahmen (4) den Trichter, der das Fertilisationsmittel enthält, trägt.

10. Sämaschine nach irgend einem der Ansprüche 1 bis 9, ***dadurch gekennzeichnet,* dass** sich ein Getriebe (24) außerhalb der Vertikalebenen, die durch die Verankerungsplatten (10) verlaufen, erstreckt.

## Claims

1. Single seeder (1) comprising a chassis (2) on which are distributed in a regular manner seeder elements (3) and a coupling frame (4) comprising one upper fastener (5) and two lower fasteners (6) allowing the connection to a three-point hitch (7) of a tractor, the said coupling frame (4) being connected to the said chassis (2) by means of an upper cross-beam (9) and two anchoring plates (10), the said upper fastener (5) extends over the said upper cross-beam (9) and substantially in a median vertical plane (11) of the said seeder (1), the said lower fasteners (6) extend beneath and on either side of the said median vertical plane (11), ***characterized in* that** the said two anchoring plates (10) extend respectively in the vicinity of a middle plane (13) extending substantially at mid distance between the median vertical plane (11) and a plane (14) passing through the corresponding lower fastener (6), the said planes (13, 14) are substantially parallel to the median vertical plane (11).

2. Seeder according to Claim 1, ***characterized in* that** the said seeder elements (3) forming a seeder having an even number of rows extend on the outside of the vertical planes passing through the said anchoring plates (10).

3. Seeder according to Claim 1 or 2, ***characterized in* that** an additional seeder element (19) is arranged substantially in the median vertical plane (11) to form a seeder having an uneven number of rows.

4. Seeder according to Claim 3, ***characterized in* that** the said anchoring plates (10) extend in the vicinity of the said additional seeder element (19) and on either side of the latter.

5. Seeder according to any one of Claims 1 to 4, ***characterized in* that** the said anchoring plates (10) extend exactly in the said corresponding middle plane (13).

6. Seeder according to any one of Claims 1 to 5, ***characterized in* that** the said coupling frame (4) comprises a lower cross-beam (20), which extends at the rear and beneath the said upper cross-beam (9).

7. Seeder according to Claim 6, ***characterized in* that** a connecting plate (21) is intended to connect each end of the said lower cross-beam (20) to the corresponding lower fastener (6).

8. Seeder according to Claim 7, ***characterized in* that** each connecting plate (21) extends as a whole above a horizontal plane passing through the said lower fasteners (6) and has a rounded shape which is freed in its lower part.

9. Seeder according to any one of Claims 1 to 8, ***characterized in* that** it is equipped with coulters (22) extending at the front of each seeder element (3) and that the said coupling frame (4) supports the hopper containing fertilizer.

10. Seeder according to any one of Claims 1 to 9, ***characterized in* that** a gearbox (24) extends outside the vertical planes passing through the said anchoring plates (10).
